Europäisches Patentamt

European Patent Office

Office européen des brevets

(19)

(11) Publication number: **0 014 018 B1**

# EUROPEAN PATENT SPECIFICATION

(45) Date of publication of patent specification: **01.02.84**

(21) Application number: **80200054.7**

(22) Date of filing: **23.01.80**

(51) Int. Cl.³: **C 08 L 23/00, C 08 L 51/06, C 08 F 8/00, C 08 F 255/00**

(54) Process for the preparation of a thermoplastic elastomer.

(30) Priority: **23.01.79 NL 7900503**

(43) Date of publication of application:
**06.08.80 Bulletin 80/16**

(45) Publication of the grant of the patent:
**01.02.84 Bulletin 84/5**

(84) Designated Contracting States:
**AT BE DE FR GB IT NL SE**

(56) References cited:
**GB - A - 1 442 527**
**LU - A - 46 240**
**US - A - 3 987 122**
**US - A - 4 010 223**
**US - A - 4 111 898**

The file contains technical information
submitted after the application was filed and not
included in this specification

(73) Proprietor: **STAMICARBON B.V.**
**Postbus 10**
**NL-6160 MC Geleen (NL)**

(72) Inventor: **Schepers, Herman Augustinus Johannes**
**Leentstraat 33**
**NL-6171 LC Stein (NL)**

(74) Representative: **Philippens, Martin Hubert Johan Jacques et al,**
**OCTROOIBUREAU DSM Postbus 9**
**NL-6160 MA Geleen (NL)**

Courier Press, Leamington Spa, England.

Process for the preparation of a thermoplastic elastomer

The present invention relates to a process for the preparation of a thermoplastic elastomer with a strength of minimum 10 MPa by mixing 50—90 parts by weight of a rubbery copolymer from ethylene and another $\alpha$-alkene having 3—6 carbon atoms and, optionally, one or more polyenes with 10—50 parts by weight of crystalline polyolefin.

Thermoplastic elastomers consisting of a rubbery copolymer of ethylene and a crystalline polyolefin are known from European Polymer Journal 11 (1975), p. 837, and from the US Patent 3,851,411. The properties of these mixtures can be varied only within rather narrow limits, mainly by varying the ratio between the rubbery copolymer and the crystalline polyolefin. Changing this ratio means changing all the properties, partly in a favourable sense, but also in an unfavourable sense. For instance, a rise of the proportion of crystalline polyolefin is attended with a rise in modulus, hardness and melt index, but effects a decrease in low-temperature toughness and in the permanent set after deformation. The possibilities of varying the type of rubbery copolymer or the type of crystalline polyolefin are limited. Although the use of a crystalline polyolefin of lower molecular weight does result in a rise of the melt index, and hence in improved processability, this is at the cost of modulus, strength and toughness. The use of a rubbery copolymer of ethylene having a lower molecular weight also raises the melt index whilst distinctly decreasing rigidity, strength and hardness.

From the German Offenlegungsschrift 2316614 it is known to graft carboxylic acid onto a thermoplastic, an elastomer, or onto a mixture of these two substances, for the preparation of thermoplastic adhesives. By preference acrylic acid is grafted onto the thermoplastic, which is given a very high melt index in this process. This high melt index is essential in the application of the adhesive.

The melt index (MFR) of this grafted polymer is between 1 and 1,000, preferably between 10 and 250, and is, in particular, least 25 to 300% higher than that of the starting material (an MFR of 10 corresponds to a melt index value of 30, measured at 230°C and 2.16 kg). To satisfy this requirements, the polymer has to be modified with at least 4% by weight of acrylic acid. As will be shown in the examples below, products of high melt index possess very poor mechanical properties. The examples even show that these properties are considerably worse than those of unmodified blends. In contrast, the products according to the invention have very good mechanical properties.

The Netherlands Patent Application 7400353 describes an adduct of an elastomeric copolymer of ethylene with maleic anhydride, which adduct has a gel content of less than about 5% (measured in boiling tetrahydrofuran). No description is given of blends with other thermoplastics. An adduct with a low gel content has low mechanical strength. Therefore the adduct is subjected to ionic vulcanization and mixed with fillers, which, admittedly, improves the mechanical strength, but makes the product very difficult to process.

The Netherlands Patent Application 7611434 describes a process for the preparation of a thermoplastic alkene elastomer. In this process an adduct of a rubbery ethylene copolymer with a dicarboxylic acid monomer is prepared with the aid of alkyl peroxides. The thermoplastic elastomeric adduct has a gel content (measured in benzene at 35°C) of at most 10% by weight. However, as the rubbery ethylene copolymer is modified so that the gel content of the adduct is below 10%, the stiffness and the tensile strength are not satisfactorily improved. The resulting products can be incorporated in such plastics as polypropylene, polyethylene, or rubbers.

The object of the present invention is to provide a thermoplastic elastomer presenting a drastically improved optimum of the most important properties, such as rigidity, hardness, strength, low-temperature toughness, and processability.

This is achieved in that the rubbery copolymer of ethylene, another $\alpha$-alkene and, optionally, one or more polyenes, is converted with an unsaturated carboxylic acid so that its gel content, as measured in benzene, is higher than 50% by weight. This unsaturated carboxylic acid is polybasic, and can be used as acid, anhydride or semi-ester. After the conversion, the rubbery copolymer has a gel content which, as measured in benzene, is preferably higher than 65% by weight, and, so measured in tetrahydrofuran, higher than 5% by weight, in particular higher than 7.5% by weight. This has been found to yield an optimum combination of mechanical properties and processability.

It has now been found, surprisingly, that both good processability and good mechanical properties can be obtained at gel contents higher than previously assumed, provided a limited amount of polyolefin is present.

In the modification of a mixture of rubbery ethylene copolymer and polyolefin the determination of the gel content (in benzene) of the modified copolymer may be based on the assumption that the whole of the polyolefin contributed to the gel content. For the gel content measured in tetrahydrofuran this assumption is not valid. In this case it may be assumed that the modified rubbery copolymer has the same gel content as is reached in a modification in the absence of polyolefin.

According to the invention 50—90 parts by weight of the rubbery ethylene copolymer—which may or may not have been converted already—are mixed with 10—50 parts by weight of crystalline polyolefin. Most preference is given to blends containing more than 60% of rubbery polymer.

It is, further, preferable for the crystalline polyolefin incorporated in the blend likewise to have been converted with an unsaturated polybasic carboxylic acid, since this effects the most favourable results. This can effectively be done by converting a mixture of rubbery copolymer and crystalline polyolefin with the unsaturated polybasic carboxylic acid.

As a result of the conversion with the unsaturated polybasic carboxylic acid (or with the anhydride or semi-ester thereof) the blends become stiffer, harder and stronger at room temperature, tougher at lower temperatures, and retain reasonable stiffness upon a rise in temperature over a longer time. In addition, the relation between melt viscosity and shear rate is so much more favourable, that also at low melt index (low shear rate) good processability (high shear rate) can be obtained. In addition to the improvement of properties mentioned above the blends acquire some other attractive properties, such as improved paint acceptance and improved oil resistance.

In those cases where it is desirable to choose the amount of unsaturated polybasic carboxylic acid in the rubbery copolymer and the amount of crystalline polyolefin independently of each other, the respective conversions should be effected separately. However, it is advantageous to effect conversion during the blending procedure, were it only to eliminate one process step.

The rubbery ethylene copolymer used according to the invention consists of ethylene and an $\alpha$-alkene with 3 to 6 carbon atoms, preferably propylene. By preference the ethylene content is between 55 and 80% by weight, in particular between 60 and 75% by weight, and the tensile strength of the rubbery copolymer is at least 50 kg/cm$^2$.

The rubbery copolymer may also contain one or more polyenes, in particular non-conjugated dienes having 6 to 12 carbon atoms. The amount of polyene may vary from 0.01 to 5 moles %, but is preferably between 0.5 and 3.5 moles %. The polyenes given most preference for application in the process according to the present invention are dienes having such a structure that only one double bond is built in the polymer and the other is freely available for conversion with the unsaturated carboxylic acid, if so desired. Double bonds that are readily built in are terminal, not sterically hindered double bonds, or double bonds in a strained ring system, e.g. in a norbornene ring. The double bond that is not built in may stem from a non-strained ring system, (e.g. decyclopentadiene), or from an alkylidene group (e.g. ethylidene norbornene) or, preferably, from an alkenyl group, in which last-mentioned case it is not directly incorporated in or attached to a ring system. Examples of such compounds are 2-propenylnorbornene, 2-butenylnorbonene, 1,5-heptadiene, and 1,4-hexadiene.

The best results are obtained if the number-average molecular weight of the rubbery copolymer is between 50,000 and 200,000.

In the process according to the invention, use is made in the mixture of a polyolefine whether or not converted with an unsaturated carboxylic acid. This polyolefine may be polyethylene as well as polypropylene, polybutylene, or poly-4-methylpentene-1, but there is a strong preference for isotactic polypropylene having a degree of crystallinity of at least 25% by weight, or for mixtures thereof with polyethylene. Besides the homopolymers, also copolymers of propylene with minor amounts of a comonomer, such as ethylene, may be applied.

The polybasic unsaturated carboxylic acid can be used in the form of an acid, an anhydride, or a semi-ester. The following examples may be mentioned: maleic acid, fumaric acid, itaconic acid, maleic anhydride, the monoethyl ester of fumaric acid, the monomethyl ester of maleic acid, and bicyclo-(2,2,1)hept-2-ene-2,3 dicarboxylic anhydride. In addition to the unsaturated polybasic carboxylic acid by means of which the rubber or the mixture is converted, also other monomers may be present in minor quantities. These quantities will preferably be below 25% by weight, in particular below 10% by weight. Besides the polybasic unsaturated carboxylic acid only a minor quantity of a simple unsaturated carboxylic acid or other vinyl monomer may be present. This quantity is at most 25% by weight, in particular 10% by weight. Most preference should be given to the use of the unsaturated polybasic carboxylic acid without the presence of other unsaturated monomers.

For the conversion of the rubber-like copolymer and the crystalline polyolefin, if any is used, with the unsaturated polybasic carboxylic acid, the usual procedures may be applied. These are carried out in suspension, solution, or bulk. Although the conversion can be effected by addition of a source of radicals, e.g. a peroxide or a hydroperoxide, or by irradiation, most preference is given to a thermal conversion in bulk, without addition of radical forming compounds, which may take place under dynamic as well as under static conditions. In this procedure use is made by preference of an ethylene copolymer containing at least 0.5 mole % of polyene. In small-scale operation, static conditions are preferred if use can be made of powdery materials. These can then in a simple fashion be blended in any ratio at room temperature, and thereafter be introduced into a closable reaction chamber to be converted. In large-scale preparation, dynamic conditions deserve preference. Dynamic blending of the carboxylic acid and/or derivatives with the rubber-like copolymer and the crystalline polyolefin, if any, requires application of high temperatures, in view of the viscosity of the polymeric materials, and high pressures. Such conditions can be reached in an extruder or an internal mixer.

In the thermal bulk conversion the polymeric materials show a strong tendency to cross-linking as well as to depolymerize. A suitable choice of the polymeric materials and correct adaptation of the conditions of the process of conversion may keep the molecular changes in the polymeric materials within the required limits, while ensuring that the degree of conversion remains sufficiently high. For obtaining a better processability, for instance, it may be advantageous to allow some depolymerisation

3

to take place. This is achieved by applying a higher conversion temperature. The conversion is preferably effected under inert conditions, i.e. in the absence of oxygen. It is particularly surprising to find that, whereas polypropylene shows a rapid and large rise in melt index when subjected to conversion with unsaturated carboxylic acids, which points to a rapid decomposition of the polymer molecules, this phenomenon can be very well controlled in the presence of an excess quantity of rubber-like ethylene copolymer.

For the conversion with the unsaturated carboxylic acid, unsaturation in the polymeric materials is not essential. It is possible, however, to promote the conversion by the application of unsaturated polymeric materials, and to achieve higher efficiencies as a result. Also the conversion temperature plays a role; it should preferably be between 180 and 400°C, in particular between 250 and 350°C. According as the temperature is higher a shorter conversion time may be applied. The conversion times are generally between 0.5 and 60 minutes. If the aim is to obtain optimum values of the low-temperature toughness, the conversion is effected at temperatures between 250 and 300°C, in a time of 2 to 60 minutes.

After the conversion, an acid, an anhydride or a semi-ester may be obtained, bonded to the polymer, the nature of the product being dependent on the structure of the carboxylic acid applied. Preference is given to the anhydride in effecting the conversion. However, as the acid yields the best results as regards properties, the anhydride is preferably converted to the acid, for instance by hydrolysis with hot acidified water.

The favourable effects of the acid groups obtained through the conversion become noticeable at an acid groups content of at least 0.1% wt., particularly 0.2% wt., whilst over 10% wt. is no longer effective. By preference the conversion is carried out with at most 5% wt. of the unsaturated carboxylic acid. Strong preference is given to a limited conversion, in particular to a conversion with less than 4% wt. of carboxylic acid, and very particularly less than 3% wt. By means of the conversion with the carboxylic acid products can be obtained which show improved properties as well at low temperatures as at room temperatures and higher temperatures, even at processing temperatures. At low temperatures mainly toughness is of importance. Tensile strength, permanent set in tension (BR) and in compression (compression set), and hardness are some of the factors determining the applicability at room temperature.

The products obtained by the process according to the invention have a tensile strength which is at least higher than 10 MPA, particularly higher than 25 MPA. At higher temperatures mainly the modulus variation plays a role. A good picture of the processing behaviour can be obtained from the relation between melt viscosity and shear rate, which may also show up extrusion defects.

The conversion is effected under such conditions that there is no or only a limited, decomposition of polymers. This decomposition can be expressed in terms of the melt index of the converted polymer, which should be below 30 dg/min. It can further be expressed as a desired maximum change of the melt index. Preferably, the melt index goes up by less than 300%, by preference by less than 50%, and particularly by less than 25%. Most preference is given to a conversion by which no rise of the melt index is obtained. It may further be said that preferably the 300% modulus and the toughness at −30°C are not lowered on account of the conversion. This means that the viscosity of the converted mixture at 190°C should be sufficiently high, e.g. higher than 100 PaS, in particular higher than 250 PaS.

If so desired, the mixtures according to the invention may be made to contain still other polymers, such as polyethylene, polyamides, or vinylpolymers. Also fillers may be added, for instance carbon black, oil, silica, quartz, talc, chalk, and gypsum, or fibrous fillers, such as glass fibers. Further, the well-known and commonly-employed additives may be incorporated, for instance pigments, anti-oxidants, stabilizers, lubricants and flame retardants.

The mixtures obtained by the process according to the invention are highly suitable for the production of high-quality articles, in particular articles for the automotive industry, where high demands are made on the properties at high as well as low temperatures.

Examples

On an open roller several rubber-like ethylene copolymers, hereinafter to be called EPDM rubbers, were mixed with various polypropylenes (PP) in 6 minutes' time, at a temperature of the roller of +180°C. The EPDM/PP weight ratio was 70/30. At +190°C and a pressure of 12.5 kg/cm² test sheets were made of this mixture by compression moulding. These were cooled to room temperature in 4 minutes at a pressure of 40 kg/cm². These sheets were subjected to a number of measurements, according to the standards mentioned below (unless otherwise stated):

1. tensile test acc. to NEN 5602, type III test specimen;
2. melt index test acc. to ASTM D 1238 at +190°C, weight 10 kg, in dg/min (for polypropylene: 230°C, 2.16 kg);
3. permanent set in tension, by 200% stretching for 24 hours and measuring one hour after release the deformation as a percentage of the original length;
4. compression set acc. to ASTM D 395, method B;

5. falling-weight test after 48 hours' conditioning (DSM Standard Method); the 5-kg falling weight has a flat bottom (1 cm$^2$); the 1.9 mm thick test sheet is supported by a 2-cm dia. ring; the falling height is 1 m;
6. ratio of melt viscosity to shear rate; the capillary employed in this test has a length-to-diameter ratio of 16.3 (dia. of capillary is 0.156 cm); temperature during measurement +190°C;
7. Hoekstra plasticity;
8. gel in THF: the proportion of insoluble adduct determined by hanging 1-mm thick test sheets in boiling tetrahydrofuran for 48 hours, at atmospheric pressure;
9. gel in benzene: the proportion of insoluble adduct determined by hanging 2-cm thick test sheets in 35°C benzene for 48 hours, at atmospheric pressure.

The numbers of compartive examples are given in brackets.

Examples 1—4

The EPDM rubbers used in these examples were composed of ethylene, propylene and hexadiene-1,4 and had the following characteristics:

| Rubber | Ethylene content, % wt. | Hexadiene-1,4 content, % wt. | Hoekstra plasticity |
|---|---|---|---|
| A | 74.0 | 1.7 | 53 |
| B | 55.1 | 4.1 | 43 |

The polypropylenes used in this example were homopolymers differing in melt index (+230°C, 2.16 kg).

| Polypropylene | Melt index, dg/min | Crystalline content (DSC), % wt. |
|---|---|---|
| 1 | 1.3 | 51 |
| 2 | 10 | 52 |

The properties of the mixtures are shown in Table 1. Also the mixing ratio is stated.

TABLE 1

| Example | | Weight ratio | Melt index dg/min | 300% modulus *kg/cm² | Tensile strength kg/cm² | Ultimate elongation in % | Hardness Shore A | Permanent set in 200% tension in % | Compression set after 22 hrs in % | Melt viscosity at shear rate of 2,1×10² Pa. sec.⁻¹ | Falling-weight test at −30°C; energy absorbed in kJ/m |
|---|---|---|---|---|---|---|---|---|---|---|---|
| (1) | EPDM-A/PP-1 | 70/30 | 2.9$^x$ | 84 | 168 | 680 | 91 | 125 | 54 | $1,1\times10^3$ critical$^{xx}$ | 3.79 |
| (2) | EPDM-A/PP-1 | 55/45 | 4.8 | 110 | 146 | 520 | 97 | 150 | 63 | $8,6\times10^2$ critical$^{xx}$ | 3.04 |
| (3) | EPDM-A/PP-2 | 70/30 | 8.9 | 43 | 86 | 650 | 88 | 100 | — | — | 2.84 |
| (4) | EPDM-B/PP-1 | 70/30 | 4.3 | — | 14 | 240 | 76 | fails | — | — | — |

$^x$At 230° and 2.16 kg 0.8 dg/min

$^{xx}$Critical means that the extruded surface shows irregularities, which is inadmissible if the compound is to be processed into articles (at higher rates of shear extrusion defects occur).

*1 MPa=10 kg/cm²

A comparison of the properties mentioned in Examples 1 and 2 shows that when the polypropylene content rises from 30 to 45% wt., melt index, modulus and hardness increase and the melt viscosity decreases. The permanent set in tension and compression at room temperature and the toughness at −30°C become worse.

A comparison of Examples 1 and 3 shows that the use of a polypropylene with a higher melt index (lower molecular weight) does result in a rise of the melt index of the mixture, but at the same time causes a decrease in modulus, hardness and toughness.

In Example 4 use was made of an EPDM rubber having a lower ethylene content and a lower Hoekstra plasticity, which resulted in a strong decrease of the tensile strength, the elongation at rupture and hardness, as compared with Example 1.

Examples 5—7

On an open roller rubber A was mixed with polypropylene 1 at +180°C (in 6 minutes), in the ratio EPDM/PP=70/30. This mixture was subsequently ground to a fine powder and then mixed with 9% wt. powdery maleic anhydride (MA). This composite mixture was converted in a mould, under nitrogen, at a temperature of +270°C and a pressure of 40 kg/cm², for 30 minutes. After cooling and homogenization on the roller (+180°C, 4 min) it was compressed to form test sheets at +190°C. Remnants of unconverted MA were removed during the further process of working-up. Subsequently a test sheet was hydrolyzed in demineralized water to which 0.5% of concentrated hydrochloric acid had been added, in 4 hours' time at a temperature of 95°C. Subsequently it was demonstrated by means of infrared spectroscopy that all of the anhydride had been converted into acid, and the proportion of bound carboxylic acid was determined as maleic acid. The value found was 2.3% wt. The results are given in Table 2, which also presents a comparison with Examples 1 and 2.

TABLE 2

| Example | | Weight ratio | Melt index dg/min | 300% modulus kg/cm² | Tensile strength kg/cm² | Ultimate elongation % | Hardness shore A | Permanent set in 200 % tension% |
|---|---|---|---|---|---|---|---|---|
| 5 | EPDM-A/PP-1/MAC[x] | 70/30/2.3 | 0.7 | 108 | | | | |
| (1) | EPDM-A/PP-1 | 70/30 | 2.9 | 84 | 323 | 530 | 92 | 110 |
| (2) | EPDM-A/PP-1 | 55/45 | 4.8 | 110 | 168 | 680 | 91 | 125 |
| 6 | EPDM-A/PP-1/MA[xx] | 70/30/2.0 | 0.9 | 104 | 146 | 520 | 97 | 150 |
| (7) | Ex. 1 | 70/30 | 2.8 | 80 | 315 | 600 | 94 | 110 |
| | (30 min. +270°C) | | | | 165 | 650 | 93 | — |

| Example | Compression set 22 hrs. in % | Melt viscosity at shear rate of $2.1 \times 10^2$ (Pa.sec.$^{-1}$)+190°C | Falling-weight test at −30°C energy absorbed (kJ/m) | Gel content in THF in wt.% | Gel content in benzene in wt.% |
|---|---|---|---|---|---|
| 5 | 56 | $1.1 \times 10^3$ smooth | 4.35 | 38.5 | 98 |
| (1) | 54 | $1.1 \times 10^3$ critical | 3.79 | 33.2 | 76 |
| (2) | 63 | $8.6 \times 10^3$ critical | 3.04 | — | — |
| 6 | 50 | $1.1 \times 10^3$ smooth | 4.77 | — | — |
| (7) | — | — | — | 33.7 | 49 |

[x] maleic acid
[xx] *non*-hydrolyzed

In example 6 no hydrolysis was applied; it has been added to make the comparison complete.

Example 7 is identical with Example 1, except that the heating of the mixture in the absence of maleic anhydride took place at 270°C for 30 minutes.

Table 2 shows clearly that the conversion with maleic anhydride, whether or not followed by hydrolysis, improves the optimum as regards modulus and —30°C toughness. Also the tensile strength, the permanent set in tension and compression show improvement. Although the melt index is lower, it appears that at higher rates of shear the melt viscosities approach one another, the converted product even exhibiting improved processability, in the sense that extrusion defects do not occur. It further appears from example 7 that the conversion conditions are such that no decomposition occurs or, at least, that the cross-linking, particularly the physical cross-linking, more than compensates for the decomposition. On a comparison of examples 5 and 6 it is shown that the hydrolysis can even further improve the properties.

Example 8—19

For the preparation of mixtures of EPDM rubber and polypropylene, separately converted with maleic anhydride, EPDM rubber A was first ground and subsequently mixed with 4.8 wt.% powdery maleic anhydride. The mixture was converted under nitrogen in 15 minutes at +270°C. After homogenizing on the roller again compressed sheets were formed. After hydrolysis the bound maleic acid content appeared to be 1.5 wt.%. EPDM B was carboxylated in 20 minutes' time at 270°C with 8 wt.% maleic anhydride to a maleic acid content of 2.2 wt.%. Polypropylene (PP-4) was likewise converted with maleic anhydride in the melt in the presence of dicumyl peroxide (0.3%) at a temperature of +200°C to a maleic-acid content of 1.0% after hydrolysis. The melt index of this modified polypropylene (PP-MAC) was 44 dg/min (+230°C, 2.16 kg).

Of the following starting materials 70/30 EPDM-PP mixtures were prepared on an open roller at +180°C in 5 minutes:

— EPDM-A
— EPDM-MAC-A (maleic acid content 1.5 wt.%)
— PP-2 (homopolymeric polypropylene with melt index 10, which melt index is chosen in order to obtain comparable melt indices for the mixtures)
— PP-MAC (homopolymer polypropylene with a maleic acid content of 1.0 wt.%, a melt index of 44 dg/min and a DSC crystalline content of 60%).

Table 3 below shows the properties EPDM rubbers before and after conversion and hydrolysis.

TABLE 3

| Example | | Melt index dg/min. | 300 % modulus kg/cm² | Tensile strength kg/cm² | Ultimate elongation % | Hardness shore A | Permanent set in 200% tension % | Falling-weight test at −30°C; energy absorbed (kJ/m) | THF gel in wt.% | Benzene gel in wt. % |
|---|---|---|---|---|---|---|---|---|---|---|
| (8) | EPDM-A | 1.3 | 28 | 184 | 1070 | 75 | 95 | — | — | — |
| (9) | EPDM-MAC-A | 0.15 | 40 | 277 | 540 | 78 | 110 | — | 9.8 | 92 |
| (10) | EPDM-A/PP-2ˣ | 8.9 | 43 | 86 | 650 | 88 | 100 | 2.84 | — | — |
| (11) | EPDM-A/PP-MAC | 9.9 | 48 | 98 | 650 | 89 | 100 | 3.60 | — | — |
| 12 | EPDM-MAC-A/PP-2 | 2.1 | 117 | 240 | 510 | 95 | 105 | 4.34 | — | 98 |
| 13 | EPDM-MAC-A/PP-MAC | 3.4 | 104 | 298 | 550 | 92 | 110 | 4.48 | — | — |
| (1) | EPDM-A/PP-1 | 2.9 | 84 | 168 | 680 | 91 | 125 | 3.79 | — | — |
| (14) | EPDM-B | 1.9 | 2 | 2 | 350 | 35 | — | — | — | — |
| (15) | EPDM-B-MAC | 0.4 | 6 | 10 | 3000 | 42 | — | — | 4.5 | 89 |
| (16) | EPDM-B/PP-2 | 14 | — | 21 | 100 | 77 | — | — | — | — |
| (17) | EPDM-B/PP-MAC | 11 | — | 9 | 100 | 56 | — | — | — | — |
| 18 | EPDM-MAC-B/PP-2 | 1.8 | 75 | 128 | 700 | 88 | 120 | — | — | — |
| 19 | EPDM-MAC-B/PP-MAC | 2.1 | 66 | 128 | 700 | 82 | 120 | — | — | — |

ˣalso in hot water for 4 hrs.

Comparison of example 10 (blank mixture) with example 1, which incorporates polypropylene converted with maleic acid, admittedly, bears out a superiority in regard to toughness at −30°C, but, the values for modulus and strength are hardly better than the blank values and lag markedly behind those of the non-modified mixtures in example 1.

Comparison of examples 12 and 10 shows definite improvements as a result of conversion of the EPDM rubber with maleic anhydride and hydrolysis. Increased hardness, modulus and strength are obtained, as well as enhanced toughness at −30°C.

Comparison of examples 13 and 12 demonstrates that improved tensile strength can be achieved by conversion of polypropylene. The conversion also results in increased melt index. Comparison of example 13 with example 1, which has a comparable melt index, shows a higher modulus and strength for the converted products by the side of an improved permanent set in tension and toughness at −30°C as compared with the blank.

From examples 14—19 it shows that on the basis of a modified EPDM rubber with a THF gel content below 5 wt.% considerably less favourable results are achieved, even in comparison with example 1 (blank).

Examples 20—24

In these examples various conversion conditions were investigated for EPDM/polypropylene mixtures in the weight ratio 70/30. To this end EPDM-A was first mixed with polypropylene-1 at 180°C in 5 minutes on an open roller and next ground to a fine powder. This powder was then mixed with 9 wt.% powdery maleic anhydride. Five identical portions were taken, which were converted under nitrogen under varying conditions. The five portions were subsequently worked up and evaluated. Table 4 below shows the results achieved.

A study of the change in melt index for examples 20—24 shows that the temperature level has a major effect, in the sense that as the temperature is increased, the decomposition of the polymeric starting materials becomes more severe, so that the favourable effect of the chemical conversion may be lost. Compare in this connection the changes in tensile strength and modulus. The toughness at −30°C is less dependent on conversion temperature, although there is a limit also here.

From example 24 it appears that the mixtures with a high melt index lag far behind those of example 1 (blank) in mechanical properties.

Examples 25—29

These examples are also meant to illustrate the conversion conditions, but now for a different mixing ratio. A different EPDM rubber was applied (EPDM-C), with an ethylene content of 73.1 wt.%, a hexadiene content of 2.0 wt.%, and a Hoekstra plasticity of 52. The green strength was 24 MPa. In addition a propylene block copolymer was employed (PP-3), with 7 wt.% of ethylene and a melt index (+230°C, 2.16 kg) of 2.6 dg/min. The crystalline content measured by the DSC method was 43%.

The propylene polymer is prepared by first polymerizing propylene, next removing the propylene residues and continuing the polymerisation for some time with ethylene.

Of both polymeric starting materials 50/50 blends were prepared with 9 wt.% powdery maleic anhydride. Table 5 below shows the results. In addition a mixture without maleic anhydride was heated (example 29).

Examples 30 and 31

In these examples the change in torsion storage modulus at increased temperature is compared for a mixture of EPDM rubber and polypropylene. As starting materials EPDM-C, PP-3 and PP-2 were employed. The EPDM/polypropylene weight ratio is 70/30 for all products. Table 6 below shows the results.

11

<p style="text-align:center">TABLE 4</p>

| Example | Conversion conditions (at 40 kg/cm²) | Built-in MAC content wt.% | Melt index dg/min | 300% modulus kg/cm² | Tensile strength kg/cm² | Ultimate elongation % | Hardness Shore A | Permanent set in 200% tension % | THF gel in wt.% | Benzene gel in wt.% | Falling-weight test at $-30°C$; energy absorbed (kJ/mm) |
|---|---|---|---|---|---|---|---|---|---|---|---|
| 20 | 30 min, +270°C | 2.2 | 0.7 | 108 | 323 | 530 | 92 | 110 | 38.5 | 98 | 4.35 |
| 21 | 5 min, +300°C | 1.5 | 1.2 | 96 | 236 | 590 | 93 | 100 | 35.3 | 97 | 4.68 |
| 22 | 10 min, +300°C | 2.3 | 1.3 | 98 | 221 | 560 | 92 | 110 | 34.8 | 98 | 4.65 |
| 23 | 30 min, +300°C | 2.7 | 3.7 | 70 | 183 | 600 | 91 | 100 | — | 96 | — |
| (24) | 6 min, +330°C | 3.6 | 50 | 36 | 105 | 660 | 87 | 120 | 24 | — | 1.18 |
| (1) | — | — | 2.9 | 84 | 168 | 680 | 91 | 125 | 33.2 | 76 | |

<p style="text-align:center">TABLE 5</p>

| Example | Conversion conditions at 40 kg/cm² | Built-in MAC content in wt.% | Melt index dg/min | 300 % modulus kg/cm² | Tensile strength kg/cm² | Ultimate elongation % | Hardness Shore A | Permanent set in 200 % tension % | THF gel in wt.% | Benzene gel in wt.% |
|---|---|---|---|---|---|---|---|---|---|---|
| 25 | 30 min, +270°C | 1.8 | 1.6 | 144 | 240 | 490 | 99 | 135 | 80.3 | 98 |
| 26 | 15 min, +300°C | 1.3 | 7 | 108 | 110 | 320 | 99 | 140 | 66.4 | 99 |
| (27) | 3 min, +320°C | 1.1 | 12 | — | 92 | 260 | 99 | fails | 60.4 | 98 |
| (28) | 6 min, +320°C | 1.3 | 32 | — | 84 | 90 | 98 | — | 55.0 | 96 |
| (29) | blank 6 min, +33°C | — | 13 | — | 85 | 190 | 98 | fails | — | — |

<p style="text-align:center">TABLE 6</p>

| Example | Conversion conditions at 40 kg/cm² | Melt Index dg/min | Storage modulus in torsion | | | | 300 % modulus kg/cm² | Tensile strength kg/cm² | Elongation % | Hardness Shore A |
|---|---|---|---|---|---|---|---|---|---|---|
| | | | 20°C | 50°C | 75°C | 100°C | | | | |
| (30) | EPDM-C/PP-3ˣ | 2.0 | $1.5 \times 10^7$ | $5 \times 10^6$ | $1.4 \times 10^6$ | — | 79 | 325 | 700 | 83 |
| (31) | EPDM-C/PP-2ˣ | 6.9 | $2.4 \times 10^7$ | $10^7$ | $4 \times 10^6$ | $3.5 \times 10^6$ | 73 | 200 | 680 | 92 |

ˣcontains no maleic acid; nevertheless treated with acidified water at +95°C for 4 hrs.

From these results it appears that PP-2, with its higher melt index and higher crystalline[x] content offers advantages with regard to melt index and torsional storage modulus. A disadvantage is the lower tensile strength and the lower toughness at −30°C. Application of PP-3 with its lower melt index and ethylene content of 7%, although offering a higher tensile strength, gives a lower resistance to decreased torsion storage modulus at temperature increase. The combination of good toughness at −30°C, high modulus and strength at room temperature with a reasonable retention of the torsion storage modulus at temperature increase appears not to be feasible with non-converted product. According to the invention it has now appeared that through conversion of the rubbery ethylene copolymer with maleic anhydride the abovementioned combination can be achieved, which is demonstrated hereinafter.

Examples 32—34

Mixtures of EPDM-C and PP-3 were converted under varying conditions with maleic anhydride, after which they were hydrolysed. Table 7 below shows the results.

It is clearly shown that through the conversion an improved torsion storage modulus level is achieved, and, also, that under less severe conversion conditions improved modulus and strength are obtained.

Examples 35—37

For comparison of the mixtures of separately converted ingredients, EPDM-C and EPDM-A were mixed with 1.6% maleic anhydride and converted in $5\frac{1}{2}$ minutes at +335°C under nitrogen.

Table 8 below shows the results. For ease of reference examples 12 and 13 are included in the table.

Examples 12 and 13 differ from 35, 36 and 37 in the sense that the EPDM rubber employed in 12 and 13 is converted under milder conditions (15 min, +270°C). This has resulted in a highly improved optimum for the combination toughness at −20°C, modulus and tensile strength at room temperature, and torsion storage modulus level at temperature up to +100°C.

---

[x]52 wt.%, against 43 wt.% for PP-3

TABLE 7

| Example | | Conversion conditions | Maleic acid content in wt.% | Melt index dg/min | Storage modulus in torsion | | | | 300 % modulus kg/cm² | Tensile strength kg/cm | Elongation % | Hardness Shore A |
|---|---|---|---|---|---|---|---|---|---|---|---|---|
| | | | | | 20°C | 50°C | 75°C | 100°C | | | | |
| 32 | EPDM-C/PP-3 | 30 min+270°C | 1.6 | 0.3 | $3.2.10^7$ | $1.4.10^7$ | $9.10^6$ | $6.8.10^6$ | 128 | 350 | 620 | 94 |
| 33 | idem | 50 min+270°C | 1.8 | 0.5 | $3.5.10^7$ | $1.4.10^7$ | $9.10^6$ | $6.5.10^6$ | .100 | 225 | 640 | 92 |
| 34 | idem | 3 min+330°C | 1.4 | $2.4^{1)}$ | $3.10^7$ | $1.3.10^7$ | $8\times10^6$ | $6.10^6$ | 72 | 152 | 670 | 92 |

[1)]melt index of the anhydride form 5.5 dg/min.

TABLE 8

| Example | | Rubber/PP ratio | Maleic-acid content wt.% | Melt index dg/min | Storage modulus in torsion | | | | 300 % modulus kg/cm² | Tensile strength kg/cm | Elongation % | Hardness Shore A |
|---|---|---|---|---|---|---|---|---|---|---|---|---|
| | | | | | 20°C | 50°C | 75°C | 100°C | | | | |
| (35) | EPDM-C/PP-MAC | 70/30 | 0.3 | 8 | $2.2\times10^7$ | $8\times10^6$ | $2\times10^6$ | — | 70 | 148 | 610 | 91 |
| 36 | EPDM-MAC-C/PP-MAC | " | 1.4 | 1.7 | $4.6\times10^7$ | $2\times10^7$ | $1.2\times10^7$ | $9\times10^6$ | 88 | 169 | 530 | 95 |
| 37 | EPDM-MAC-C/PP-3 | " | 1.1 | 1.6 | $3.6\times10^7$ | $1.5\times10^7$ | $9\times10^6$ | $7.5\times10^6$ | 88 | 233 | 730 | 92 |
| 13 | EPDM-MAC-A/PP-MAC | 70/30 | — | 3.4 | $3.1\times10^7$ | $1.2\times10^7$ | $8\times10^6$ | $5.6\times10^6$ | 104 | 298 | 550 | 92 |
| 12 | idem/PP-2 | " | — | 2.1 | $3.7\times10^7$ | $1.6\times10^7$ | $1.1\times10^7$ | $3\times10^6$ | 117 | 240 | 510 | 95 |

# O 014 018

## Claims

1. Process for the preparation of a thermoplastic elastomer with a tensile strength of at least 10 MPa by mixing 50—90 parts by weight of a rubbery copolymer from ethylene and another $\alpha$-alkene having 3—6 carbon atoms and, optionally, one or more polyenes with 10—50 parts by weight of a crystalline polyolefin, characterized in that the rubbery copolymer is converted with an unsaturated polybasic carboxylic acid, so that the gel content measured in benzene is higher than 50% by weight and that the melt index of the mixture is lower than 30 dg/min.

2. Process according to claim 1, characterized in that the rubbery copolymer after conversion shows a gel content which is higher than 5% by weight measured in tetrahydrofuran.

3. Process according to claims 1—2, characterized in that the gel content measured in benzene is at least 65% by weight and measured in tetrahydrofuran is at least 7.5% by weight.

4. Process according to claims 1—3, characterized in that the copolymer has an ethylene content between 55 and 80% by weight.

5. Process according to claims 1—4, characterized in that the crystalline polyolefin is also converted with an unsaturated polybasic carboxylic acid.

6. Process according to claim 5, characterized in that the rubbery copolymer and the crystalline polyolefin are converted together with an unsaturated polybasic carboxylic acid.

7. Process according to claims 1—6, characterized in that the mixture contains more than 60% by weight of rubbery copolymer.

8. Process according to claims 1—7, characterized in that the melt index is increased by less than 25% by the conversion.

9. Process according to claim 9, characterized in that the melt index is not increased.

10. Process according to claim 9, characterised in that the unsaturated polybasic carboxylic is applied as acid, anhydride or semi-ester.

11. Process according to claims 1—10, characterized in that the mixture contains not more than 4% by weight of polybasic carboxylic acid bound to the ingredients of the mixture.

12. Process according to claims 1—11, characterized in that maleic acid or derivatives thereof are employed as the unsaturated polybasic carboxylic acid, with not more than 10% of other unsaturated monomers being present.

13. Process according to claim 12, characterized in that no other unsaturated monomers are present.

14. Process according to claims 1—13, characterized in that the conversion with the unsaturated polybasic carboxylic acid is effected at a temperature of between 250 and 350°C.

15. Process according to claims 1—14, characterized in that a rubbery ethylene propylene copolymer with a number-average molecular weight between 50,000 and 200,000 is used.

16. Process according to claims 1—15, characterized in that the polyene content in the rubbery ethylene copolymer is in excess of 0.5 mole %.

17. Process according to claims 1—16, characterized in that the conversion with the unsaturated polybasic carboxylic acid is effected without addition of radical forming compounds.

## Revendications

1. Procédé pour la préparation d'un élastomère thermoplastique avec une résistance à la traction d'au moins 10 MPa par mélange de 50—90 parties en poids d'un copolymère caoutchouteux d'éthylène et d'un autre $\alpha$-alcène ayant 3—6 atomes de carbone et, facultativement, d'un ou plusieurs polyènes avec 10—50 parties en poids d'une polyoléfine cristalline, caractérisé en ce que le copolymère caoutchouteux est convertie avec un acide carboxylique polybasique insaturé, de sorte que la teneur en gel mesurée dans du benzène est supérieure à 50% en poids et en ce que l'indice de fusion du mélange est inférieur à 30 dg/min.

2. Procédé selon la revendication 1, caractérisé en ce que le copolymère caoutchouteux présente, après conversion, une teneur en gel qui est supérieure à 5% en poids, mesurée dans du tétrahydrofuranne.

3. Procédé selon les revendications 1—2, caractérisé en ce que la teneur en gel mesurée dans du benzène est d'au moins 65% en poids et, mesurée dans du tétrahydrofuranne, est d'au moins 7,5% en poids.

4. Procédé selon les revendications 1—3, caractérisé en ce que le copolymère a une teneur en éthylène comprise entre 55 et 80% en poids.

5. Procédé selon les revendications 1—4, caractérisé en ce que la polyoléfine cristalline est aussi convertie avec un acide carboxylique polybasique insaturé.

6. Procédé selon la revendication 5, caractérisé en ce que le copolymère caoutchouteux et la polyoléfine cristalline sont convertis ensemble avec un acid carboxylique polybasique insaturé.

7. Procédé selon les revendications 1—6, caractérisé en ce que le mélange contient plus de 60% en poids de copolymère caoutchouteux.

15

# O 014 018

8. Procédé selon les revendications 1—7, caractérisé en ce que l'indice de fusion est augmenté de moins de 25% par la conversion.

9. Procédé selon la revendication 8, caractérisé en ce que l'indice de fusion n'est pas augmenté.

10. Procédé selon la revendication 8, caractérisé en ce que l'acide carboxylique polybasique insaturé est appliqué en tant qu'acide, anhydride ou semi-ester.

11. Procédé selon les revendications 1—10, caractérisé en ce que le mélange ne contient pas plus de 4% en poids d'acide carboxylique polybasique lié aux ingrédients du mélange.

12. Procédé selon les revendications 1—11, caractérisé en ce que l'acide maléique ou des dérivés de celui-ci sont employés comme l'acide carboxylique polybasique insaturé, pas plus de 10% d'autres monomères insaturés n'étant présents.

13. Procédé selon la revendication 12, caractérisé en ce qu'aucuns autres monomères insaturés ne sont présents.

14. Procédé selon les revendications 1—13, caractérisé en ce que la conversion avec l'acide carboxylique polybasique insaturé est effectuée à une température comprise entre 250 et 350°C.

15. Procédé selon les revendications 1—14, caractérisé en ce qu'un copolymère éthylène propylène caoutchouteux à poids moléculaire moyen en nombre compris entre 50.000 et 200 000 est utilisé.

16. Procédé selon les revendications 1—15, caractérisé en ce que la teneur en polyène dans le copolymère éthylène caoutchouteux est en excès de 0,5% mole.

17. Procédé selon les revendications 1—16, caractérisé en ce que la conversion avec l'acide carboxylique polybasique insaturé est effectuée sands addition de composés formant des radicaux.


## Patentansprüche

1. Verfahren zur Herstellung eines thermoplastischen Elastomeren mit einer Zugfestigkeit von mindestens 10 MPa durch Vermischen von 50—90 Gew.-Teilen eines Kautschukartigen Copolymeren aus Äthylen und einem anderen $\alpha$-Alken mit 3—6 Kohlenstoffatomen und, gegebenenfalls einem oder mehreren Polyenen mit 10—50 Gew.-Teilen eines kristallinen Polyolefins, dadurch gekennzeichnet, daß das kautschukartige Copolymere mit einer ungesättigten mehrbasischen Carbonsäure umgewandelt ist, so daß der Gelgehalt, gemessen in Benzol, höher ist als 50 Gew.-% und daß der Schmelzindex des Gemisches niedriger ist als 30 dg/min.

2. Verfahren nach Anspruch 1, dadurch gekennzeichnet, daß das kautschukartige Copolymere nach der Umwandlung einen Gelgehalt zeigt, der gemessen in Tetrahydrofuran, höher ist als 5 Gew.-%.

3. Verfahren nach Anspruch 1 und 2, dadurch gekennzeichnet, daß der Gelgehalt, gemessen in Benzol, mindestens 65 Gew.-% und, gemessen in Tetrahydrofuran, mindestens 7,5 Gew.-% beträgt.

4. Verfahren nach den Ansprüchen 1 bis 3, dadurch gekennzeichnet, daß das Copolymere einen Äthylengehalt zwischen 55 und 80 Gew.-% hat.

5. Verfahren nach den Ansprüchen 1 bis 4, dadurch gekennzeichnet, daß das kristalline Polyolefin gleichfalls mit einer ungesättigten mehrbasischen Carbonsäure umgewandelt ist.

6. Verfahren nach Anspruch 5, dadurch gekennzeichnet, daß das kautschukartige Copolymere und das kristalline Polyolefin gemeinsam mit einer ungesättigten mehrbasischen Carbonsäure um gewandelt sind.

7. Verfahren nach den Ansprüchen 1 bis 6, dadurch gekennzeichnet, daß das Gemisch mehr als 60 Gew.-% kautschukaritiges Copolymeres enthält.

8. Verfahren nach den Ansprüchen 1 bis 7, dadurch gekennzeichnet, daß der Schmelzindex durch die Umwandlung um weniger als 25% erhöht ist.

9. Verfahren nach Anspruch 8, dadurch gekennzeichnet, daß der Schmelzindex nicht erhöht ist.

10. Verfahren nach Anspruch 9, dadurch gekennzeichnet, daß die ungesättigte mehrbasische Carbonsäure als Säure, Anhydrid oder Halbester eingesetzt wird.

11. Verfahren nach den Ansprüchen 1 bis 10, dadurch gekennzeichnet, daß das Gemisch nicht mehr als 4 Gew.-% mehrbasische Carbonsäure an die Bestandteile des Gemisches gebunden enthält.

12. Verfahren nach den Ansprüchen 1 bis 11, dadurch gekennzeichnet, daß Maleinsäure oder deren Derivate als ungesättige mehrbasische Carbonsäure eingesetzt werden, wobei nicht mehr als 10% andere ungesättigte Monomere anwesend sind.

13. Verfahren nach Anspruch 12, dadurch gekennzeichnet, daß keine anderen ungesättigten Monomeren anwesend sind.

14. Verfahren nach den Ansprüchen 1 bis 13, dadurch gekennzeichnet, daß die Umwandlung mit der ungesättigten mehrbasischen Carbonsäure bei einer Temperatur zwischen 250 und 350°C bewirkt wird.

15. Verfahren nach den Ansprüchen 1 bis 14, dadurch gekennzeichnet, daß ein kautschukartiges Äthylen-Propylen-copolymeres mit einer Durchschnittszahl des Molekulargewichts zwischen 50.000 und 200.000 verwendet wird.

16. Verfahren nach den Ansprüchen 1 bis 15, dadurch gekennzeichnet, daß der Polyengehalt in dem kautschukartigen Äthylen-copolymeren mehr als 0,5 Mol-% beträgt.

# 0 014 018

17. Verfahren nach den Ansprüchen 1 bis 16, dadurch gekennzeichnet, daß die Umwandlung mit der ungesättigten mehrbasischen Carbonsäure ohne Zusatz von radikalbildenden Verbindungen bewirkt wird.

17